Europäisches Patentamt

European Patent Office

Office européen des brevets

(19)

(11) Numéro de publication: **0 239 480**
**A1**

# (12) DEMANDE DE BREVET EUROPEEN

(21) Numéro de dépôt: 87400615.8

(22) Date de dépôt: 19.03.87

(51) Int. Cl.⁴: **H 04 N 1/40**

(30) Priorité: **19.03.86 FR 8603917**

(43) Date de publication de la demande:
**30.09.87 Bulletin 87/40**

(84) Etats contractants désignés:
**AT BE CH DE ES GB GR IT LI LU NL SE**

(71) Demandeur: **Vignon, Bernard**
**52, rue Charles de Gaulle Ouges**
**F-21600 Longvic (FR)**

(72) Inventeur: **Vignon, Bernard**
**52, rue Charles de Gaulle Ouges**
**F-21600 Longvic (FR)**

(74) Mandataire: **Bruder, Michel**
**10 rue de la Pépinière**
**F-75008 Paris (FR)**

(54) **Procédé de reproduction d'une image à partir de la numérisation de cette image.**

(57) Le procédé est caractérisé en ce qu'on constitue un rectangle R découpé en 2c bandes verticales de même largeur, prise comme unité, recoupées par $l$ lignes horizontales, sur lesquelles sont ainsi délimités, par les diverses bandes verticales, des segments égaux de longueur unité, on choisit deux nombres $s_2$ et $s_n$ définissant respectivement un seuil de blanc et un seuil de noir, on place, sur chacun des segments AM et A'M des points $S_b$, $S'_b$, $S_n$,$S'_n$ tels que $AS_b = A'S'_b = s_b/2$ et $MS_n = MS'_n = s_n/2$, on fait correspondre aux valeurs numériques p et q figurant dans le tableau, à l'intersection d'une ligne k et des colonnes b et b + 1, des premiers et seconds points P et Q et on teint en noir toutes les zones contenant les segments PQ délimités entre les premiers et seconds points, et en blanc le reste.

*Fig:4*

EP 0 239 480 A1

**Description**

La présente invention concerne un procédé de reproduction d'une image à partir de la numérisation de cette image.

On connaît déjà des procédés d'analyse d'images dans lesquels on balaye cette image suivant une succession de lignes superposées et où on affecte, à chaque zone élémentaire ou pixel de l'image, une valeur numérique correspondant au niveau de gris dans ce pixel. Une image est ainsi caractérisée par une succession de valeurs numériques associées individuellement aux divers pixels constituant l'image.

La présente invention concerne des perfectionnements apportés à de tels procédés dans le but de permettre d'obtenir, à partir d'une image originale, des images reproduites présentant un aspect particulièrement attractif.

A cet effet ce procédé de reproduction d'une image, à partir de la numérisation de cette image, dans lequel on fait correspondre à l'image un tableau de valeurs numériques réparties en lignes et colonnes, chaque valeur numérique se trouvant à l'intersection d'une ligne donnée et d'une colonne donnée représentant un niveau de gris d'une zone élémentaire ou pixel correspondant de l'image, est caractérisé en ce qu'on choisit deux nombres $s_b$ et $s_n$ inférieurs chacun à l'unité, dont la somme est également inférieure à l'unité et qui correspondent à des valeurs extrêmes définissant respectivement un seuil de blanc et un seuil de noir, on constitue un rectangle R découpé en 2c bandes verticales de même largeur, prise comme unité, recoupées par l lignes horizontales sur lesquelles sont ainsi délimitées, par les diverses bandes verticales, des segments égaux de longueur unité, chaque bande verticale b de rang pair délimitant un segment AM et la bande verticale adjacente de rang impair b + l délimitant un autre segment A'M, on place, sur chacun des segments AM et A'M des points $S_b$, $S'_b$, $S_n$,$S'_n$ tels que $AS_b = A'S'_b = sb/2$ et $MS_n = MS'_n = sn/2$, on fait correspondre aux valeurs numériques p et q, préalablement ramenées à des valeurs comprises dans l'intervalle (0,1), figurant dans le tableau, à l'intersection d'une ligne k et des colonnes b et b + 1, des premiers et seconds points P et Q des segments $S_bS_n$ et $S'_nS'_b$ tel que $S_nP = S_nS_b \times p$ et $S'_nQ = S'_nS'_b \times q$, si bien que l'on obtient dans chaque bande verticale de rang pair une suite de premiers points P et dans chaque bande verticale de rang impair une suite de seconds points Q, les premiers points P étant ainsi reliés entre eux par des lignes brisées, de même que les seconds points Q, et on teint en noir ou avec une couleur foncée toutes les zones contenant les segments PO délimités entre les premiers et seconds points, et en blanc ou avec une couleur claire le reste.

On décrira ci-après, à titre d'exemple non limitatif, une forme d'exécution de la présente invention en référence aux dessins annexés sur lequel :

La figure 1 est un schéma synoptique illustrant le procédé de reproduction d'une image suivant l'invention.

La figure 2 est un schéma illustrant une partie de l'image reproduite obtenue par le procédé suivant l'invention.

La figure 3 est un schéma d'une variante d'image obtenue par le procédé suivant l'invention.

La figure 4 est un schéma d'une partie d'une image réellement obtenue par le procédé suivant l'invention.

Les figures 5,6 et 7 sont des schémas illustrant les variantes d'exécution.

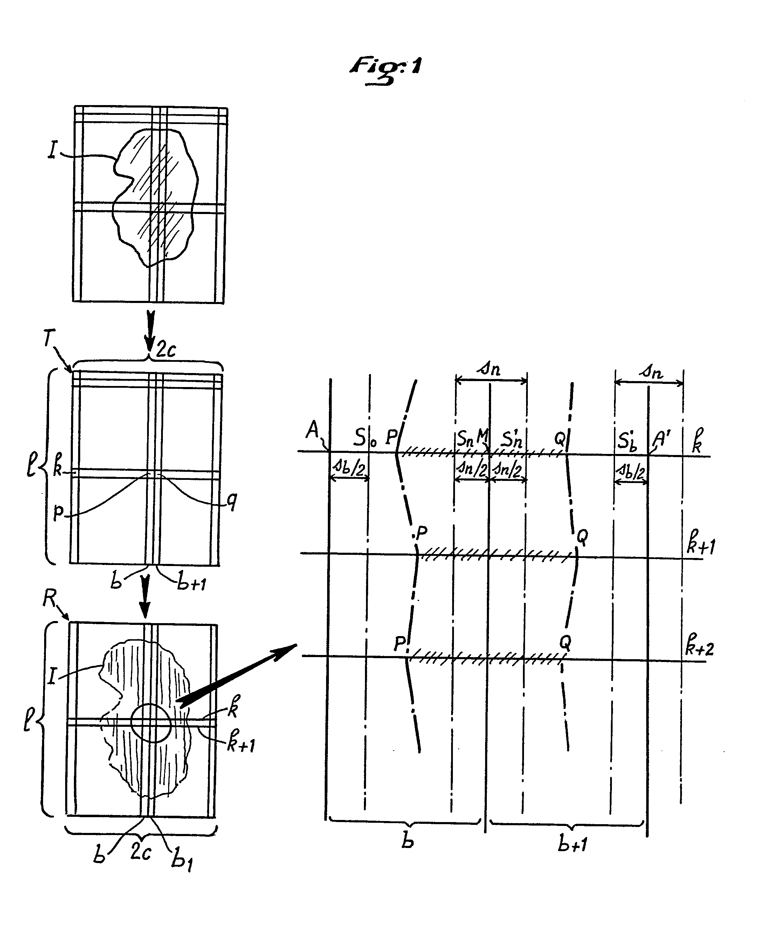

Le procédé suivant l'invention comprend, ainsi qu'il est illustré schématiquement sur la figure 1, une première phase de numérisation dans laquelle on procède à une analyse de cette image I, par balayage suivant un réseau matriciel de lignes et de colonnes et on détermine, pour chaque zone élémentaire ou pixel se trouvant à une intersection d'une ligne et d'une colonne, le niveau de gris de cette zone auquel on affecte une valeur numérique correspondante. Ces valeurs numériques sont constituées chacune par un nombre compris entre la valeur O, affectée au blanc (ou au noir), et la valeur 1 affectée au noir (ou au blanc).

A la suite de cette numérisation de l'image I on obtient un tableau rectangulaire T de valeurs numériques composé d'un nombre pair 2c de colonnes, et d'un nombre quelconque 1 de lignes. Dans chaque zone élémentaire se trouvant à l'intersection d'une ligne et d'une colonne du tableau T se trouve une valeur numérique correspondant au niveau de gris de la zone élémentaire ou pixel correspondant de l'image I. A titre d'exemple à l'intersection de la ligne k du tableau T et de la colonne b de ce tableau se trouve la valeur numérique p et à l'intersection de cette même ligne k et de la colonne immédiatement adjacente b + l se trouve la valeur numérique q, ces valeurs numériques p et q correspondant à deux niveaux de gris identiques ou différents.

Suivant l'invention on traite les diverses valeurs p,q etc. ainsi obtenues pour reconstituer, sur un support approprié, une image I contenue dans un rectangle R reproduisant la disposition en lignes et colonnes du tableau T. Autrement dit ce rectangle R est découpé en 2c bandes verticales de même largeur (cette largeur étant prise, par la suite, comme unité), ces 2c bandes verticales étant recoupées par l lignes horizontales.

On détermine ensuite deux nombres $s_b$ et $s_n$, tous les deux compris entre 0 et 1, et qui correspondent respectivement au seuil de blanc et au seuil de noir de l'image I. Ces nombres $s_b$ et $s_n$ sont également choisis de telle façon que leur somme soit inférieure à 1.

L'intersection de la ligne k avec la bande b détermine un segment AM et son intersection avec la bande immédiatement adjacente b + l détermine un autre segment A'M. Sur chacun de ces segments

AM et A'M on place les points $S_b$ et $S'_b$ correspondant au seuil de blanc et les points $S_n$ et $S'_n$ correspondant au seuil de noir tels que $AS_b = A'S'_b = s_b/2$ et $MS_n = MS'_n = s_n/2$

On place ensuite sur ces mêmes segments AM et A'M, respectivement des points P et Q correspondant aux valeurs numériques p et q.

Le point P est placé sur le segment AM, de telle façon que $S_nP = S_nS_b \times p$

Le point Q est placé sur le segment A'M de telle façon que $S'_nQ = S'_nS'_b \times q$

On obtient ainsi dans la bande verticale et pour chacune des lignes k, k+1, k+2, une succession de point P correspondant aux diverses valeurs numériques contenues dans la colonne b du tableau T, et de la même façon on obtient dans la bande verticale b+1 une succession de points Q correspondant respectivement aux diverses valeurs numériques contenues dans la colonne adjacente b+1 du tableau T.

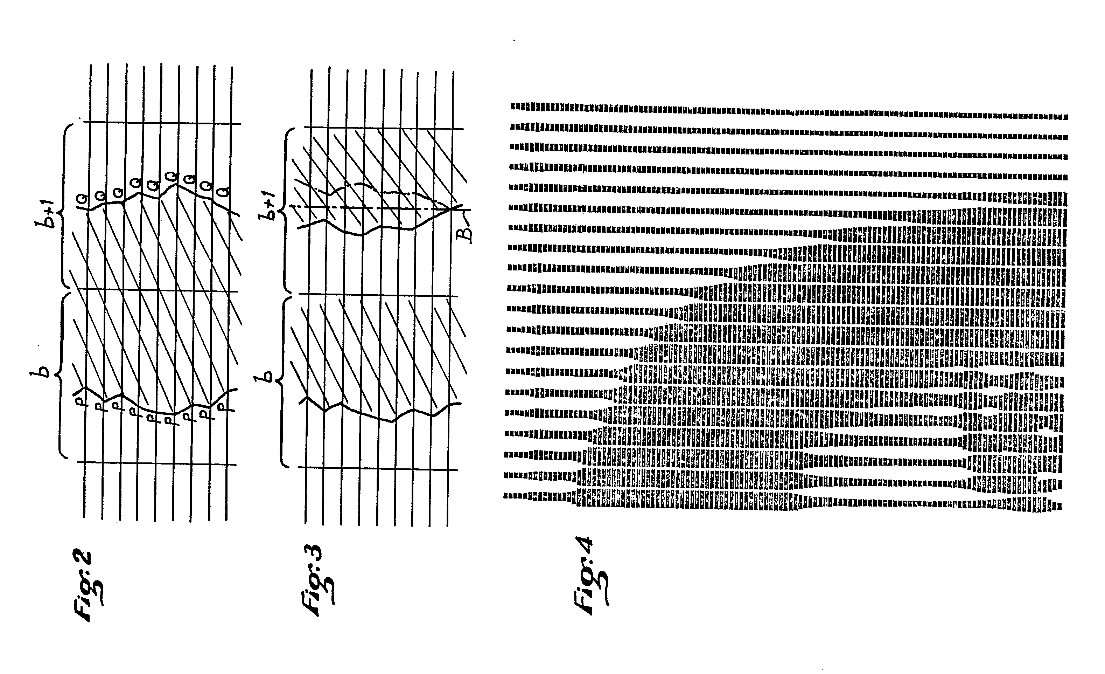

Dans chacune des bandes b,b+1, etc. les points P et Q sont reliés entre eux par une ligne brisée comme on peut le voir sur la figure 2, qui peut être lissée. Ce lissage peut être réalisé, dans une exécution pratique, au moyen d'une lame coupante au moyen de laquelle on découpe, dans le support de l'image I en papier toutes les parties blanches (ou noires) des colonnes.

Si, dans le tableau T, la valeur O est celle du blanc et la valeur I celle du noir, on teint alors en noir ou avec une couleur foncée, ainsi qu'il est illustré par les hachures sur la figure 2, toutes les zones contenant les segments PQ et en blanc ou avec une couleur claire le reste. On obtient ainsi l'image I qui est telle que représentée partiellement, par exemple , sur la figure 4. Cette image est formée par une alternance de bandes verticales noires dont la largeur est variable et au moins égale au seuil de noir $s_n$, et de bandes blanches dont la largeur est variable et au moins égale au seuil de blanc $s_b$.

Si le seuil de noir $s_n$ n'est pas nul, les bandes noires sont ininterrompues du haut en bas de l'image I. Si le seuil de blanc $s_b$ n'est pas nul, les bandes blanches sont également ininterrompues du haut en bas de l'image I.

Les dimensions du rectangle R sur lequel apparaît l'image reconstituée I, sont choisies de façon à préserver les proportions de l'image ou à les modifier intentionnellement.

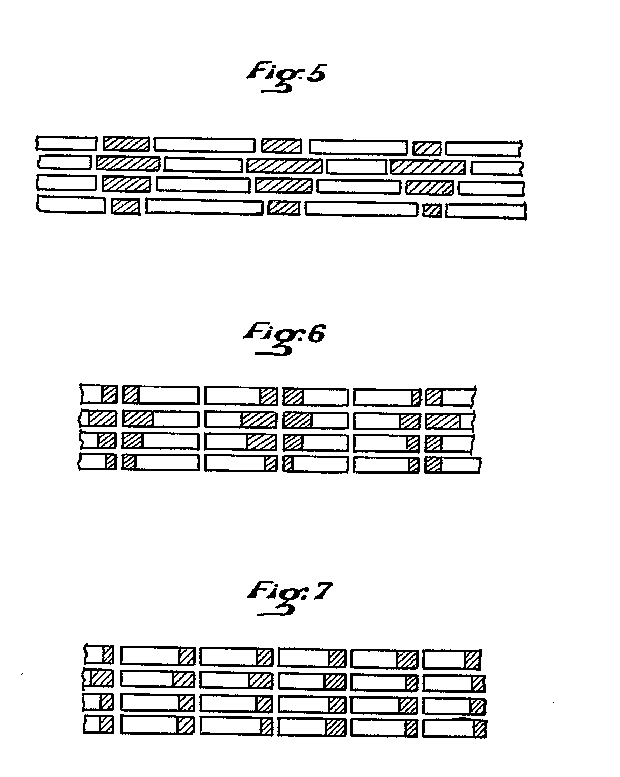

Le dessin de l'image reproduite I peut être également obtenu en remplaçant une bande verticale sur deux, par exemple chaque bande de rang impair b + I, par son symétrique par rapport à son axe vertical B, ainsi qu'il est représenté sur la figure 3.

L'image I qui est reproduite en mettant en oeuvre le procédé suivant l'invention, peut être présentée telle quelle sur un support en papier, carton, tissu, bois, métal, cuir, métal, matière plastique, pierre, verre, etc ou elle peut être mise en valeur par diverses méthodes.

On peut faire une copie de l'image I sur un support foncé suffisamment mince, en supprimant les bandes claires (pour que les bandes noires soient continues, on choisit le seuil de noir $s_n$ non nul) et on présente l'image dans l'espace en laissant apparaître, en clair, les zones évidées ou on la présente sur un support clair.

On peut également copier l'image I sur un support clair, en supprimant les bandes foncées (avec un seuil de blanc $s_b$ non nul) et en présentant l'image dans l'espace ou sur un support foncé.

On peut aussi copier l'image I sur un support foncé (ou clair), en supprimant les parties claires (ou foncées) et en procédant à une attaque sélective (sablage, attaque par un acide, gravure...), les parties attaquées pouvant être ou non regarnies d'un produit clair (ou foncé).

On peut également reproduire l'image I en marquetterie.

On peut aussi reproduire l'image I par des parallélépipèdes d'un produit quelconque, foncés ou clairs (ou foncés et clairs) sur l'une des faces, ainsi qu'il est représenté, à titre d'exemples, sur les figures 5,6,7. Ce procédé peut également utiliser des pièces d'une seule couleur placées sur des plans différents, de telle sorte que l'ombre laisse paraître plus foncées celles qui sont en retrait. Les parallélépipèdes peuvent aussi être uniformément translucides, d'épaisseur variable, et regardés par transparence ou ne pas avoir la même transparence.

Si on prend p = q, les zones contenant les segments PQ sont symétriques par rapport à leur axe vertical. On peut alors, dans l'espace, les remplacer par des pièces tournées dont elles constituent la section axiale.

## Revendications

1.- Procédé de reproduction d'une image, à partir de la numérisation de cette image, dans lequel on fait correspondre à l'image un tableau de valeurs numériques réparties en lignes et colonnes, chaque valeur numérique se trouvant à l'intersection d'une ligne donnée et d'une colonne donnée représentant un niveau de gris d'une zone élémentaire ou pixel correspondant de l'image, on choisit deux nombres $s_b$ et $s_n$ inférieur chacun à l'unité, dont la somme est également inférieure à l'unité et qui correspondent à des valeurs extrêmes définissant respectivement un seuil de blanc et un seuil de noir, caractérisé en ce qu' on constitue un rectangle R découpé en 2c bandes verticales de même largeur, prise comme unité, recoupées par I lignes horizontales, sur lesquelles sont ainsi délimités, par les diverses bandes verticales, des segments égaux de longueur unité, chaque bande verticale b de rang pair délimitant un segment AM et la bande verticale adjacente de rang impair b + I délimitant un autre segment A'M, on place, sur chacun des segments AM et A'M des points $S_b$, $S'_b$, $S_n$, $S'_n$ tels que $AS_b = A'S'_b = s_b/2$ et $MS_n = MS'_n = s_n/2$, on fait correspondre aux valeurs numériques p et q, préalablement ramenées à des valeurs comprises dans l'intervalle (0,1), figurant dans le tableau à l'intersection d'une ligne k et des colonnes b et b + l, des premiers et seconds points P et Q des segments $S_bS_n$ et $S'_nS'_b$ tel que $S_nP = S_nS_b x p$ et $S'_nQ = S'_nS'_b$ x q, si bien que l'on obtient dans chaque bande verticale de rang pair une suite de premiers points P et dans chaque bande verticale de rang impair une suite de seconds points Q, les premiers points P étant ainsi reliés entre eux par des lignes brisées, de même que les seconds points Q, et on teint en noir ou avec une couleur foncée toutes les zones contenant les segments PQ délimités entre les premiers et seconds points, et en blanc ou avec une couleur claire le reste.

2.- Procédé suivant la revendication 1, caractérisé en ce qu'on lisse les lignes brisées formées par les premiers et seconds points P et Q.

3.- Procédé suivant la revendication 2 caractérisé en ce qu'on évide les parties blanches ou les parties noires des colonnes.

4.- Procédé suivant l'une quelconque des revendications précédentes caractérisé en ce que on remplace une bande verticale sur deux par son symétrique par rapport à son axe de symétrie vertical.

0239480

Fig. 1

0239480

Fig.2

b        b+1

Fig.3

b        b+1

B

Fig.4

0239480

**Fig.5**

**Fig.6**

**Fig.7**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 830 967 (LONG) <br> * Colonne 1, ligne 56 - colonne 2, ligne 43; colonne 4, ligne 54 - colonne 5, ligne 6 * | 1 | H 04 N 1/40 |
| Y | | 2-4 | |
| | --- | | |
| Y | US-A-3 757 036 (LIBBET) <br> * Colonne 4, ligne 57 - colonne 8, ligne 3 * | 2,3 | |
| | --- | | |
| Y | US-A-3 482 039 (VALENTIN) <br> * Colonne 1, lignes 21-27; colonne 6, lignes 5-16 * | 3 | |
| | --- | | |
| Y | US-A-3 842 312 (EMMONS) <br> * Colonne 3, ligne 48 - colonne 4, ligne 41; colonne 12, lignes 30-48 * | 4 | DOMAINES TECHNIQUES RECHERCHES (Int. Cl.4) <br><br> H 04 N 1/00 |
| | --- | | |
| A | DE-A-3 338 722 (VICTOR COMPANY OF JAPAN) | | |
| | --- | | |
| A | US-A-3 197 558 (ERNST) | | |
| | ----- | | |

Le présent rapport de recherche a été établi pour toutes les revendications

| Lieu de la recherche | Date d'achèvement de la recherche | Examinateur |
|---|---|---|
| LA HAYE | 24-06-1987 | DE ROECK A.F.A. |